(19) 
**Europäisches Patentamt**
**European Patent Office**
**Office européen des brevets**

(11) **EP 2 621 110 A1**

(12) **EUROPEAN PATENT APPLICATION**
published in accordance with Art. 153(4) EPC

(43) Date of publication:
**31.07.2013 Bulletin 2013/31**

(21) Application number: **11826959.6**

(22) Date of filing: **22.02.2011**

(51) Int Cl.:
*H04B 7/26* (2006.01)          *H04W 56/00* (2009.01)

(86) International application number:
**PCT/KR2011/001136**

(87) International publication number:
**WO 2012/039531 (29.03.2012 Gazette 2012/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2010 KR 20100092336**

(71) Applicant: **Innowireless Co., Ltd.**
**Gyeonggi-do 463-400 (KR)**

(72) Inventors:
• **JOUNG,Jinsoup**
  **Seongnam-si**
  **Gyeonggi-do 463-500 (KR)**

• **JI, Seunghwan**
  **Seongnam-si**
  **Gyeonggi-do 463-768 (KR)**
• **LIM, Yonghoon**
  **Seoul 142-150 (KR)**
• **LEE, Eunjin**
  **Seongnam-si**
  **Gyeonggi-do 461-140 (KR)**
• **YANG, Seungik**
  **Seoul 151-022 (KR)**

(74) Representative: **Winter, Brandl, Fürniss, Hübner, Röss, Kaiser, Polte - Partnerschaft**
  **Alois-Steinecker-Strasse 22**
  **85354 Freising (DE)**

(54) **REFERENCE SIGNAL GENERATION APPARATUS AND PREAMBLE SEQUENCE DETECTION APPARATUS USING THE SAME**

(57)    The present invention relates to a method for shortening the time taken for physical random access channel (PRACH) signal synchronization and preamble sequence detection in an LTE uplink system, and more particularly, to a method for shortening the time taken for preamble sequence detection using an inverse discrete Fourier transform. To this end, a preamble sequence detection apparatus according to the present invention comprises: a reference signal generation unit, which includes a preamble sequence generation unit for receiving a first signal having a predetermined length and outputting a plurality of second signals having the length of 839, a discrete Fourier transform unit for performing a discrete Fourier transform on the second signals received from the preamble sequence generation unit to transform the second signals into a frequency domain signal, a subcarrier mapping unit for mapping the frequency domain signal outputted from the discrete Fourier transform unit to a subcarrier, and an inverse discrete Fourier transform unit for receiving a signal having the length of $2^n$ from the subcarrier mapping unit and performing an inverse discrete Fourier transform to transform the received signal into a time domain signal having the length of $2^n$; a PRACH reception unit which receives a PRACH signal transmitted from a terminal; and a second correlation unit which detects a correlation between the reference signal received from the reference signal generation unit and a signal received from the PRACH reception unit.

FIG. 4

EP 2 621 110 A1

**Description**

**Technical Field**

The present invention relates, in general, to a scheme for shortening the time required to obtain synchronization between Physical Random Access Channel (PRACH) signals and detect a preamble sequence in a Long Term Evolution (LTE) uplink system and, more particularly, to a scheme for shortening a time required to detect a preamble sequence using an inverse discrete Fourier transform.

**Background Art**

A Long Term Evolution (LTE) system based on an Orthogonal Frequency Division Multiplexing (OFDM) scheme is a next generation mobile communication system which will replace a Universal Mobile Telecommunication System (UMTS) that is a third (3rd) generation mobile communication standard, and is currently being discussed by the 3rd Generation Partnership Project (3GPP). An OFDM scheme is configured to transmit data using multiple subcarriers in a frequency domain. Since such an OFDM scheme transmits data while maintaining orthogonality between subcarriers, it has high frequency efficiency, is robust to frequency selective fading and multi-path fading, and is capable of reducing interference between symbols using a guard period (Cyclic Prefix: CP). Further, an OFDM scheme has an advantage of being robust to impulse noise owing to the simple structure of an equalizer from the standpoint of hardware, thus obtaining optimal transmission efficiency upon transmitting data at high speed.

In 3GPP LTE uplink, a Discrete Fourier Transform (DFT) is performed before mapping between subcarriers is performed so as to solve the problem of a Peak to Average Power Ratio (PAPR) in OFDM technology. This technology is called Single Carrier Frequency Division Multiple Access (SC-FDMA) in LTE. In LTE uplink, Zadoff-Chu Constant Amplitude Zero Auto Correlation (CAZAC) (hereinafter referred to as 'CAZAC code') having excellent auto-correlation and cross-correlation characteristics is used to establish initial synchronization using a PRACH and maintain synchronization using a Sounding Reference Signal (SRS). CAZAC is a code used to generate a Reference Signal (RS).

A Physical Uplink Control Channel (PUCCH), a Physical Uplink Shared Channel (PUSCH), a Physical Random Access Channel (PRACH), and a Sounding Reference Signal (SRS) Channel are used as LTE uplink channels. PRACH denotes an LTE uplink channel transmitted by a terminal so as to establish initial synchronization. PUCCH denotes an LTE uplink control channel, and includes Channel Quality Indicator (CQI) information, ACK/NACK, etc. PUSCH denotes an LTE uplink data channel. SRS is one of Reference Signals (RSs) of the LTE uplink, and is periodically transmitted by the terminal, thus maintaining the synchronization of the terminal, the initial synchronization of which has been established using the PRACH. Further, SRS indicates the quality of the uplink channel and then causes the channel quality to be used as the input information of the uplink scheduler of a base station.

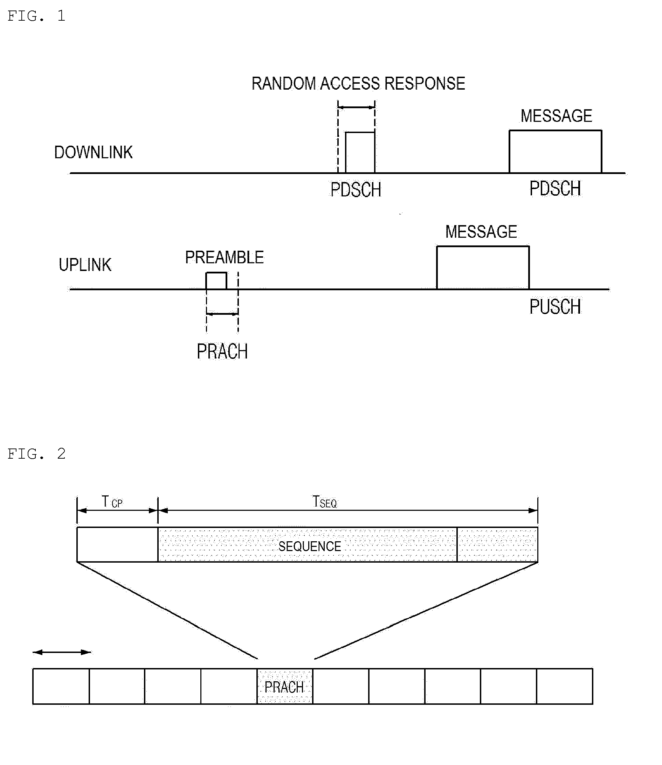

FIG. 1 is a diagram showing a method of performing a random access process in an LTE system. The random access process is used by a terminal to establish time synchronization with a network, or obtain wireless resources required to transmit uplink data.

Referring to FIG. 1, a terminal transmits a single preamble through a Physical Random Access Channel (PRACH) that is an uplink physical channel. As the preamble, one of 64 preambles is selected and transmitted.

When receiving the preamble transmitted from the terminal, a base station transmits a random access response to a downlink physical channel. The base station transmits Acknowledgment (ACK) or Not-Acknowledgment (NACK) based on the random access response to the terminal.

The terminal is allocated 64 preambles (that is, sequences), which can be used by the terminal, from the base station, and uses one selected from among the allocated sequences as a preamble for the random access process. The base station has information about all possible sequences and must simultaneously calculate correlations between all sequences. The maximum number of preambles allocated to the terminal is 64. In this case, the base station must detect a single sequence, which has been selected and transmitted by the terminal, and thus 64 correlators must be simultaneously implemented.

**Disclosure**

**Technical Problem**

An object of the present invention is to provide a scheme for allowing a base station to detect a preamble sequence used by a terminal from a plurality of preamble sequences while consuming less hardware resources, by using a simple method.

Another object of the present invention is to provide a scheme for shortening the time required by a base station to detect a preamble sequence, used by a terminal, from a plurality of preamble sequences.

A further object of the present invention is to provide a scheme for obtaining synchronization between a terminal and a base station by calculating, with regard to a CP and a sequence constituting a PRACH, a point at which the sequence starts, and for shortening the time required to detect a preamble sequence used by the terminal using synchronization.

## Technical Solution

In order to accomplish the above objects, a reference signal generation apparatus according to the present invention includes a preamble sequence generation unit for receiving a first signal having a predetermined value and outputting a plurality of second signals, each having a length of 839, a Discrete Fourier Transform (DFT) unit for performing a DFT on the second signals received from the preamble sequence generation unit, and transforming the second signals to frequency domain signals, a subcarrier mapping unit for performing subcarrier mapping on the frequency domain signals output from the DFT unit, and an Inverse DFT (IDFT) unit for receiving a signal having a length of $2^n$ (where $n$ is a natural number) from the subcarrier mapping unit, performing an IDFT on the signal, and transforming a resulting signal into a time domain signal having a length of $2^n$ (where $n$ is a natural number).

In order to accomplish the above objects, a preamble sequence detection apparatus according to the preset invention includes a reference signal generation unit including a preamble sequence generation unit for receiving a first signal having a predetermined value and outputting a plurality of second signals, each having a length of 839, a Discrete Fourier Transform (DFT) unit for performing a DFT on the second signals received from the preamble sequence generation unit, and transforming the second signals to frequency domain signals, a subcarrier mapping unit for performing subcarrier mapping on the frequency domain signals output from the DFT unit, and an Inverse DFT (IDFT) unit for receiving a signal having a length of $2^n$ (where $n$ is a natural number) from the subcarrier mapping unit, performing an IDFT on the signal, and transforming a resulting signal into a time domain signal having a length of $2^n$ (where $n$ is a natural number), a Physical Random Access Channel (PRACH) reception unit for receiving a PRACH signal transmitted from a terminal, and a second correlation unit for detecting correlations between reference signals received from the reference signal generation unit and the signal received from the PRACH reception unit.

## Advantageous Effects

The preamble sequence detection apparatus according to the present invention obtains synchronization between a terminal and a base station by calculating, with regard to a CP and a sequence constituting a PRACH, a point at which the sequence starts, and shortens the time required by the base station to detect a preamble sequence used by the terminal using synchronization.

## Description of Drawings

FIG. 1 is a diagram showing a method of performing a random access process in an LTE system;
FIG. 2 is a diagram showing the structure of a PRACH transmitted by a terminal to a base station according to an embodiment of the present invention;
FIG. 3 is a block diagram showing a process in which the base station generates reference signals using 64 preamble sequences according to an embodiment of the present invention;
FIG. 4 is a block diagram showing a configuration in which the base station detects a preamble sequence, transmitted by the terminal through a PRACH, according to an embodiment of the present invention;
FIG. 5 is a block diagram showing another configuration in which the base station detects a preamble sequence, transmitted by the terminal through a PRACH, according to an embodiment of the present invention; and
FIG. 6 is a diagram showing an operation performed by a division unit according to an embodiment of the present invention.

<Description of the Reference Numerals in the Drawings>

300: preamble sequence generation unit 302: 839-DFT unit
304: subcarrier mapping unit 306: 2048-IDFT unit

**Best Mode**

The above and other objects, features, and aspects of the present invention will be more clearly understood from the following detailed description of preferred embodiments taken in conjunction with the accompanying drawings. Hereinafter, the present invention will be described in detail so that those skilled in the art may easily understand and implement the present invention from those embodiments.

FIG. 2 is a diagram showing the structure of a Physical Random Access Channel (PRACH) transmitted by a terminal to a base station according to an embodiment of the present invention. As shown in FIG. 2, the structure of the PRACH is composed of a Cyclic Prefix (CP) and a sequence. The following Table 1 shows parameters of the random access preamble of the PRACH.

Table 1

| Preamble format | CP length ($T_{CP}$) | Sequence length ($T_{seq}$) |
|---|---|---|
| 0 | 3186*Ts | 24576*Ts |
| 1 | 21024*Ts | 24576*Ts |
| 2 | 6240*Ts | 2*24576*Ts |
| 3 | 21024*Ts | 2*24576$**Ts |
| 4 | 448*Ts | 4096*Ts |

In this case, Ts = 1(15000*2048) sec.

The base station decides to use one preamble format among preamble formats based on a channel environment, a cell radius, etc., and broadcasts information about the preamble format to a terminal located in a cell. The terminal receives the broadcasted preamble format, and configures a PRACH using the received information.

As described above, the LTE system transmits/receives data by inserting a guard period, to which a cyclic Prefix (CP) is input, into a transmission signal for each symbol as a method for reducing multi-path influence (ghost). That is, the guard period to which the CP is input is inserted by lengthening the symbol period of a transmission signal to be transmitted, and so data is transmitted, thus reducing intersymbol interference that may occur due to the delay of symbols received while passing through the multi-path, and also reducing inter-channel interference owing to the maintenance of orthogonality between subcarriers.

The terminal selects one from among available preamble sequences, and transmits the selected preamble sequence through the PRACH. For example, the terminal may select one from among 64 available preamble sequences and transmit the selected preamble sequence through the PRACH.

As shown in FIG. 2, it can be seen that in the structure of the PRACH, a signal identical to the CP is located at the last portion of the sequence. The present invention proposes a scheme for obtaining synchronization using a signal transmitted through the PRACH.

The present invention obtains synchronization using a signal received through the PRACH by the following Equation 1:

[Equation 1]

$$p = MAX\{ \sum_{i=0}^{\text{cyclic prefix length-1}} R(i)R(m + i)^{*} \}$$

where m = sequence length, and R(i) = signal received from terminal.

As proposed in Equation 1, the present invention calculates correlations between the signal received from the terminal and signals obtained by shifting the received signal at regular intervals. By using a correlation having a maximum value among the calculated correlations, synchronization that is information about a time at which the terminal transmitted the signal through the PRACH is obtained. That is, the base station must obtain synchronization with the terminal so as to perform smooth communication with the terminal, and such synchronization is obtained by calculating correlations between the signal received from the terminal and signals obtained by shifting the received signal at regular intervals, as described above.

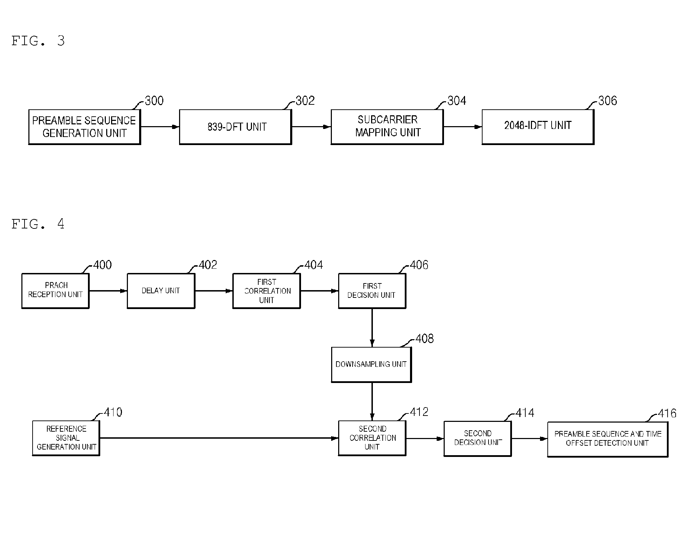

FIG. 3 is a block diagram showing a process in which the base station generates reference signals using 64 preamble sequences according to an embodiment of the present invention. Below, the process for generating reference signals using 64 preamble sequences according to an embodiment of the present invention will be described in detail.

Referring to FIG. 3, a block for generating reference signals includes a preamble sequence generation unit 300, a Discrete Fourier Transform (DFT) unit 302, a subcarrier mapping unit 304, and an Inverse Discrete Fourier Transform (IDFT) unit 306.

In order to transmit control information, orthogonal sequences may be used. An orthogonal sequence denotes a sequence having excellent correlation characteristics. There is a Constant Amplitude Zero Auto-Correlation (CAZAC) sequence as an example of the orthogonal sequence.

A Zadoff-Chu (ZC) sequence, one of CAZAC sequences, will be described. The kth element c(k) of a root ZC sequence which is a root index M may be represented by the following Equation 2:

[Equation 2]

$$c(k) = \exp\left\{-\frac{j\pi Mk(k+1)}{N}\right\}, \quad \text{for N odd}$$

$$c(k) = \exp\left\{-\frac{j\pi Mk^2}{N}\right\}, \quad \text{for N even}$$

where N denotes the length of the ZC sequence, index M denotes a natural number equal to or less than N, and M and N are relatively prime to each other. If N is a prime number, the number of root indices of the ZC sequence is N-1.

[Equation 3]

$$\left|c(k)\right| = 1 \quad \text{for all k, N, M}$$

[Equation 4]

$$R_{M;N}(d) = \begin{cases} 1, & \text{for d = 0} \\ 0, & \text{for d } \neq \text{ 0} \end{cases}$$

[Equation 5]

$$R_{M_1,M_2;N}(d) = const \quad \text{for all } M_1, M_2$$

Equation 3 indicates that the magnitude of the ZC sequence is always 1, and Equation 4 indicates that the auto-correlation of the ZC sequence is represented by a Dirac-delta function. Here, the auto-correlation is based on a circular correlation. Equation 5 indicates that cross-correlation is always a constant.

It is assumed that, in a wireless communication system, cells are distinguished from each other using the root indices of the ZC sequence. The terminal needs to be aware of a root index that is available in the corresponding cell or a group of available root indices. The base station must broadcast an available root index or a group of available root indices to the terminal.

When the length of the ZC sequence is N, a number of root indices that are relatively prime to each other and are less than N are present. When N is a prime number, the number of root indices is N-1. In this case, the base station notifies the terminal of any one of N-1 root indices.

Each cell may use a variety number of root indices depending on the cell radius. When the cell radius increases, the number of ZC sequences between which orthogonality may be maintained through a cyclic shift may be decreased due to the influence of propagation delay or round trip delay and/or delay spread. That is, when the cell radius increases, even the number of cyclic shifts that are available in the corresponding root index may be reduced if the lengths of ZC sequences are uniform. In this way, sequences generated by cyclic shifts in the root index have orthogonality therebetween, and so they are also called Zero Correlation Zone (ZCZ) sequences. The minimum number of ZC sequences allocated to the terminal for each cell must be guaranteed, so that when the cell radius increases, the minimum number of ZC sequences may be ensured by increasing the number of root indices used in the cell.

The preamble sequence generation unit 300 generates 64 preamble sequences by shifting a ZC sequence, generated using CAZAC code.

The DFT unit 302 performs a DFT on the 64 preamble sequences generated by the preamble sequence generation unit 300. In relation to the present invention, the DTF unit 302 transforms the preamble sequences into frequency domain signals by performing 839-DTF. If an input signal having a length of 839, which is a prime number, is received, the DFT unit 302 performs 839-DFT, and outputs a signal having a length of 839 which is a prime number.

The subcarrier mapping unit 304 maps the preamble sequences, transformed into frequency domain signals, to desired frequency bands. The IDFT unit 306 transforms preamble sequence signals mapped to the frequency bands into time domain signals by performing an IDFT. In relation to the present invention, the IDFT unit performs $2^n$ (where n is a natural number)-IDFT. As an example, if an input signal having a length of 2048 is received, the IDFT unit performs 2048-IDFT and outputs a signal having a length of 2048.

FIG. 4 is a block diagram showing a configuration in which the base station detects a preamble sequence transmitted by the terminal through a PRACH according to an embodiment of the present invention. Hereinafter, a process in which the base station detects a preamble sequence transmitted by the terminal through the PRACH will be described in detail with reference to FIG. 4.

Referring to FIG. 4, a detection block diagram includes a PRACH reception unit 400, a delay adjustment unit 402, a first correlation unit 404, a first decision unit 406, a downsampling unit 408, a reference signal generation unit 410, a second correlation unit 412, a second decision unit 414, and a preamble sequence and time offset detection unit 416.

The PRACH reception unit 400 receives a signal transmitted by the terminal through the PRACH. As described above, the terminal selects one from among available preamble sequences, performs a DFT, subcarrier mapping, and an IDTF, adds a CP to a guard period, which is to be inserted, in order to promote the improvement of performance of a PRACH receiver in a time domain, and then transmits a resulting signal to the base station. The PRACH reception unit 400 transfers the signal received through the PRACH to the delay unit. The delay adjustment unit 402 delays the signal received from the PRACH reception unit 400 by a predetermined length so as to generate signals having a plurality of signals, the lengths of which are integer multiples of a unit length, from the received signal. That is, signals $R(i)$ and $R(m + i)$ shown in Equation 1 are generated.

The generated signals are transferred to the first correlation unit 404. The first correlation unit 404 measures correlations between the received signals $R(i)$ and $R(m + i)$ based on formulas shown in Equation 1, and transfers the results of the measurement to the first decision unit 406.

The first decision unit 406 decides on a signal having a highest correlation depending on the received correlations, and obtains information about the time at which the terminal transmitted the signal through the PRACH, based on the decided correlation.

Thereafter, the downsampling unit 408 downsamples a signal having a length of 24576 to have a length of $2^n$ (where n is a natural number), and transfers a resulting signal to the second correlation unit 412. As described above, the downsampling unit may downsample the signal having a length of 24576 to have a length of $2^n$ (where n is a natural number), and then transfer the resulting signal to the second correlation unit 412.

As described above with reference to FIG. 3, the reference signal generation unit 410 generates 64 reference signals by performing a DFT, subcarrier mapping, and an inverse DTF on the generated 64 preamble sequences. The reference signal generation unit 410 transfers the generated reference signals to the second correlation unit 412.

The second correlation unit 412 detects correlations between the signal received from the downsampling unit 408 and the reference signals received from the reference signal generation unit 410.

Equation 6 shows an equation used when the second correlation unit 412 detects correlations between the signal received from the downsampling unit 408 and the reference signals received from the reference signal generation unit 412.

[Equation 6]

$$r_F = MAX\{\sum_{i=0}^{2^n-1} R(i)S(i)_k^*\}_{k=0}^{\text{number of ref\_signals}-1}$$

where $R(i)$ = signal received through the PRACH, and $S(i)$ denotes signals received from the reference signal generation unit.

The second correlation unit 412 transfers the correlations $r_F$ detected using Equation 6 to the second decision unit 414. The second decision unit 414 detects a correlation having a highest value from the correlations received from the correlation unit, and transfers information about the detected correlation to the preamble sequence and time offset detection unit 416.

The preamble sequence and time offset detection unit 416 may know a preamble sequence used by the terminal by checking a reference signal corresponding to the received correlation. That is, a correlation between the reference signal, in which a preamble sequence identical to the preamble sequence used by the signal received from the PRACH reception unit 400 is used, and the signal, received from the PRACH reception unit 400, has the highest value. By performing the above procedures, the base station can detect the preamble sequence used by the terminal and a time offset related to information about the time at which the signal was transmitted through the PRACH.

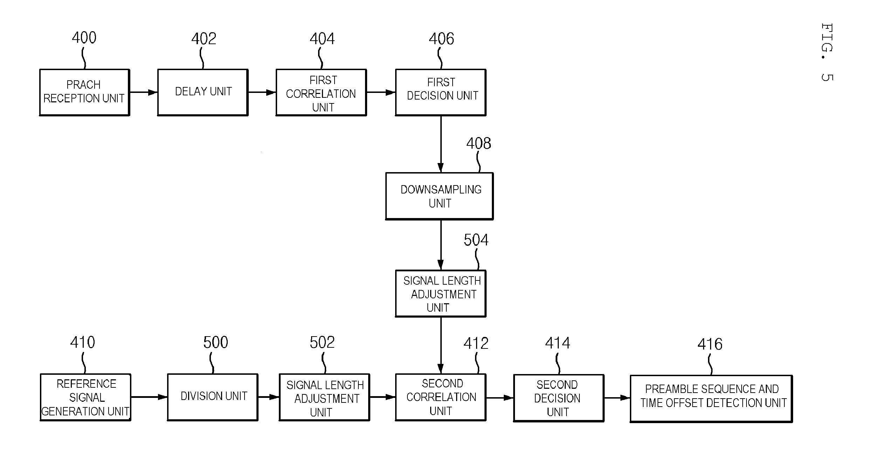

In this way, the present invention detects the preamble sequence using $2^n$ (where n is a natural number)-IDFT instead of detecting the preamble sequence using existing 24576-IDFT, thus obtaining the advantage of shortening detection time. FIG. 5 is a block diagram showing another configuration in which the base station detects a preamble sequence, transmitted by the terminal through a PRACH, according to an embodiment of the present invention. Hereinafter, a process in which the base station detects a preamble sequence transmitted by the terminal through the PRACH will be described in detail with reference to FIG. 5.

Referring to FIG. 5, the detection block diagram further includes a division unit 500 and a signal length adjustment unit 502, compared to FIG. 4. Below, FIG. 5 will be described based on the division unit and the signal length adjustment unit 502.

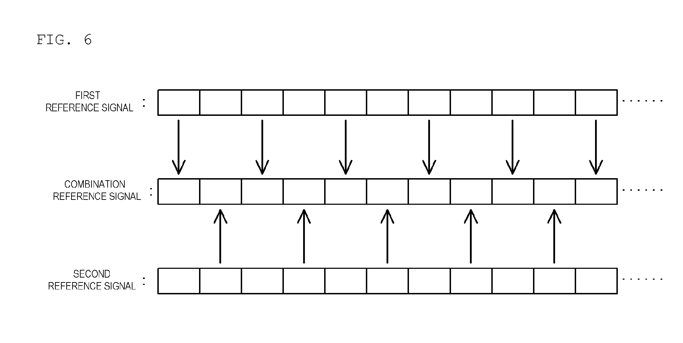

The division unit 500 receives a plurality of reference signals generated by the reference signal generation unit. As shown in FIG. 6, the division unit 500 generates a new reference signal by combining signals located at odd-numbered registers of a first reference signal among the received reference signals with signals located at even-numbered registers of a second reference signal among the received reference signals. That is, the division unit 500 generates a single new reference signal by combing two reference signals with each other among the received reference signals. As described above, the division unit 500 generates a first combination reference signal by combining the first reference signal with the second reference signal, and generates a second combination reference signal by combining a third reference signal with a fourth reference signal. Of course, the division unit 500 may generate a single new reference signal by combining at least two of the received reference signals. For example, the division unit 500 may also generate a single new reference signal by combining three of the received reference signals. The division unit 500 transfers the generated reference signal to the signal length adjustment unit 502.

The signal length adjustment unit 502 adjusts a signal length to a value less than $2^n$ so as to further reduce calculations from the length of $2^n$. The signal length adjustment unit 502 transfers the length-adjusted signal to the second correlation unit 412. The signal downsampled by the downsampling unit 408 is also transferred to a signal length adjustment unit 504, and the signal length adjustment unit 504 adjusts a signal length to a value less than $2^n$ so as to further reduce calculations from the length of $2^n$.

The second correlation unit 412 detects a correlation between the signal received from the downsampling unit 408 and the reference signal received from the division unit 500.

The following Equation 7 denotes a formula used when the second correlation unit 412 detects the correlation between the signal received from the downsampling unit 408 and the reference signal received from the division unit 412.

[Equation 7]

$$r_F = MAX\{\{ \sum_{i=0}^{(d/2)-1} R(2*i)S(2*i)_m^* \}, \sum_{i=0}^{(d/2)-1} R(2*i+1)S(2*i+1)_m^* \}\}_{m=0}^{\text{number of ref\_signals}-1}$$

where d denotes the length of the reference signal. The second correlation unit 412 transfers the correlation $r_F$ detected using Equation 7 to the decision unit. Thereafter, the operations of the second decision unit and the preamble sequence and time offset detection unit are identical to those of FIG. 4.

Although the present invention has been described with reference to embodiments shown in the drawings, these embodiments are only exemplary and those skilled in the art will appreciate that various modifications and other equivalent embodiments are possible from the above embodiments.

**Claims**

**1.** A reference signal generation apparatus comprising:

a preamble sequence generation unit for receiving a first signal having a predetermined value and outputting a plurality of second signals, each having a length of 839;

a Discrete Fourier Transform (DFT) unit for performing a DFT on the second signals received from the preamble sequence generation unit, and transforming the second signals to frequency domain signals;

a subcarrier mapping unit for performing subcarrier mapping on the frequency domain signals output from the DFT unit; and

an Inverse DFT (IDFT) unit for receiving a signal having a length of $2^n$ (where n is a natural number) from the subcarrier mapping unit, performing an IDFT on the signal, and transforming a resulting signal into a time domain signal having a length of $2^n$ (where n is a natural number).

2. The reference signal generation apparatus of claim 1, wherein n is 11.

3. The reference signal generation apparatus of claim 1, wherein the preamble sequence generation unit generates 64 preamble sequence signals, each having a length of 839.

4. The reference signal generation apparatus of claim 3, wherein the preamble sequence generation unit uses Constant Amplitude Zero Auto-Correlation (CAZAC) code having excellent auto-correlation or cross-correlation characteristics.

5. A preamble sequence detection apparatus comprising:

a reference signal generation unit including a preamble sequence generation unit for receiving a first signal having a predetermined value and outputting a plurality of second signals, each having a length of 839, a Discrete Fourier Transform (DFT) unit for performing a DFT on the second signals received from the preamble sequence generation unit, and transforming the second signals to frequency domain signals, a subcarrier mapping unit for performing subcarrier mapping on the frequency domain signals output from the DFT unit, and an Inverse DFT (IDFT) unit for receiving a signal having a length of $2^n$ (where n is a natural number) from the subcarrier mapping unit, performing an IDFT on the signal, and transforming a resulting signal into a time domain signal having a length of $2^n$ (where n is a natural number);

a Physical Random Access Channel (PRACH) reception unit for receiving a PRACH signal transmitted from a terminal; and

a second correlation unit for detecting correlations between reference signals received from the reference signal generation unit and the signal received from the PRACH reception unit.

6. The preamble sequence detection apparatus of claim 5, further comprising a second decision unit for deciding on a correlation having a highest value among the correlations received from the second correlation unit.

7. The preamble sequence detection apparatus of claim 6, further comprising a preamble sequence and time offset detection unit for detecting a preamble sequence included in the signal received from the PRACH reception unit using the correlation received from the decision unit.

8. The preamble sequence detection apparatus of claim 5, further comprising:

a delay adjustment unit for delaying the signal received from the PRACH reception unit by a predetermined time length so as to generate a plurality of signals, lengths of which are integer multiples of a unit length from the received signal;

a first correlation unit for measuring correlations between two signals received from the delay adjustment unit;

a first decision unit for deciding on a correlation having a highest value among the correlations received from the first correlation unit; and

a downsampling unit for downsampling a signal having a length of 24576 received from the PRACH reception unit to have a length of $2^n$ (where n is a natural number), and transferring a downsampled signal to the second correlation unit.

9. The preamble sequence detection apparatus of claim 8, wherein the first correlation unit calculates a correlation (p) using the following equation:

$$p = MAX\{ \sum_{i=0}^{\text{cyclic prefix length}} R(i)R(m + i)^{*} \}$$

where m = sequence length and R(i) = signal received from terminal.

10. The preamble sequence detection apparatus of claim 5, further comprising a division unit for generating a single combination reference signal by combining at least two reference signals received from the reference signal generation unit.

11. The preamble sequence detection apparatus of claim 10, wherein the second correlation unit calculates the correlations using the following equation:

$$r_F = MAX\{\{ \sum_{i=0}^{(d/2)-1} R(2*i)S(2*i)_m^{*} \}, \sum_{i=0}^{(d/2)-1} R(2*i+1)S(2*i+1)_m^{*} \}\}_{m=0}^{\text{number of ref\_signals}-1}$$

where $d$ denotes a length of the reference signal, $R(i)$ denotes the signal received from the downsampling unit, and $S(i)$ denotes the signal received from the division unit.

FIG. 1

RANDOM ACCESS RESPONSE

MESSAGE

DOWNLINK

PDSCH

PDSCH

MESSAGE

UPLINK

PREAMBLE

PRACH

PUSCH

FIG. 2

$T_{CP}$

$T_{SEQ}$

SEQUENCE

PRACH

FIG. 3

| PREAMBLE SEQUENCE GENERATION UNIT | → | 839-DFT UNIT | → | SUBCARRIER MAPPING UNIT | → | 2048-IDFT UNIT |
|---|---|---|---|---|---|---|
| 300 | | 302 | | 304 | | 306 |

FIG. 4

| PRACH RECEPTION UNIT | → | DELAY UNIT | → | FIRST CORRELATION UNIT | → | FIRST DECISION UNIT |
|---|---|---|---|---|---|---|
| 400 | | 402 | | 404 | | 406 |

DOWNSAMPLING UNIT
408

| REFERENCE SIGNAL GENERATION UNIT | → | SECOND CORRELATION UNIT | → | SECOND DECISION UNIT | → | PREAMBLE SEQUENCE AND TIME OFFSET DETECTION UNIT |
|---|---|---|---|---|---|---|
| 410 | | 412 | | 414 | | 416 |

FIG. 5

PRACH RECEPTION UNIT — 400

DELAY UNIT — 402

FIRST CORRELATION UNIT — 404

FIRST DECISION UNIT — 406

DOWNSAMPLING UNIT — 408

SIGNAL LENGTH ADJUSTMENT UNIT — 504

SECOND CORRELATION UNIT — 412

SECOND DECISION UNIT — 414

PREAMBLE SEQUENCE AND TIME OFFSET DETECTION UNIT — 416

REFERENCE SIGNAL GENERATION UNIT — 410

DIVISION UNIT — 500

SIGNAL LENGTH ADJUSTMENT UNIT — 502

FIG. 6

FIRST
REFERENCE SIGNAL :

COMBINATION
REFERENCE SIGNAL :

SECOND
REFERENCE SIGNAL :

| INTERNATIONAL SEARCH REPORT | International application No. |
|---|---|
| | **PCT/KR2011/001136** |

**A.    CLASSIFICATION OF SUBJECT MATTER**

*H04B 7/26(2006.01)i, H04W 56/00(2009.01)i*

According to International Patent Classification (IPC) or to both national classification and IPC

**B.    FIELDS SEARCHED**

Minimum documentation searched (classification system followed by classification symbols)
H04B 7/26; H04J 3/06; H04W 74/08; H04W 56/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: preamble, reference signal, fourier, subcarrier, sychronization

**C.    DOCUMENTS CONSIDERED TO BE RELEVANT**

| Category* | Citation of document, with indication, where appropriate, of the relevant passages | Relevant to claim No. |
|---|---|---|
| X | Picochip Technology, "An Overview of LTE PRACH Detection for the PC20x", CTO Office Technical Note, CTO-TN-0009, Beijing, China (http://support.picochip.com) 02 April 2008 | 1-7 |
| A | See pages 6-7 and figures 2-3. | 8-11 |
| X | NEC, "RACH Preamble Length" In: 3GPP TSG RAN WG1 Meeting #46bis R1-062766, Seoul, Korea 09 October 2006 | 1-7 |
| A | See pages 1-2 and figure 1. | 8-11 |
| A | US 2002-0114355 A1 (JAE-YOEL KIM et al.) 22 August 2002 See abstract and claims 1-4. | 1-11 |
| A | KR 10-0313928 B1 (LG INFORMATION & COMMUNICATIONS LTD.) 15 November 2001 See abstract, claims 1-3 and paragraphs [27]-[36]. | 1-11 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 OCTOBER 2011 (31.10.2011) | **31 OCTOBER 2011 (31.10.2011)** |

| Name and mailing address of the ISA/KR | Authorized officer |
|---|---|
| Korean Intellectual Property Office Government Complex-Daejeon, 139 Seonsa-ro, Daejeon 302-701, Republic of Korea | |
| Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2011/001136**

| Patent document cited in search report | Publication date | Patent family member | Publication date |
|---|---|---|---|
| US 2002-0114355 A1 | 22.08.2002 | AU 2002-24185 A1 | 03.06.2002 |
| | | AU 2002-24185 B2 | 20.11.2003 |
| | | CA 2397965 A1 | 30.05.2002 |
| | | CA 2397965 C | 25.10.2005 |
| | | CN 1175591 C0 | 10.11.2004 |
| | | CN 1395766 A0 | 05.02.2003 |
| | | EP 1209843 A2 | 29.05.2002 |
| | | EP 1209843 A3 | 12.10.2005 |
| | | JP 03-636707 B2 | 06.04.2005 |
| | | JP 2004-515112 A | 20.05.2004 |
| | | JP 2004-515112 T | 20.05.2004 |
| | | KR 10-0498919 B1 | 04.07.2005 |
| | | KR 20020039589A | 27.05.2002 |
| | | US 7027444 B2 | 11.04.2006 |
| | | WO 02-43279 A1 | 30.05.2002 |
| KR 10-0313928 B1 | 15.11.2001 | NONE | |

Form PCT/ISA/210 (patent family annex) (July 2009)